# EUROPEAN PATENT APPLICATION

(11) **EP 4 718 268 A1**
(43) Date of publication of application: **01.04.2026**
(21) Application number: 24902040.5
(22) Date of filing: 04.06.2024
(51) Int. Cl.: G06F 13/16, G06F 17/16

(54) **DATA TRANSMISSION METHOD, DATA TRANSMISSION APPARATUS AND ELECTRONIC DEVICE**

(30) Priority: 12.12.2023 CN 202311700987
(71) Applicant: Hygon Information Technology Co., Ltd., Tianjin 300392 (CN)
(72) Inventor: CHEN, Qing, Tianjin 300392 (CN); YUAN, Qing, Tianjin 300392 (CN); HUA, Rui, Tianjin 300392 (CN)
(74) Representative: EIP
(86) International application number: PCT/CN2024/097168
(87) International publication number: WO 2025/123611

(57) **Abstract**

A data transmission method, a data transmission apparatus and an electronic device. The method is used for transmitting data from a first memory to a second memory, a first storage unit at each depth in a bank has a width of K bits, and the second memory comprises a plurality of second storage units that are continuously arranged. The method comprises: sequentially reading data stored in a first storage unit at each depth among N depths, and sequentially storing the data of the N depths in a buffer unit, wherein the data has m bits, and each first storage unit is divided into K/m data sub-units according to the m bits from a low bit to a high bit (S10); and according to a specified sequence, writing the data in a bank from the buffer unit to a second memory, wherein the specified sequence comprises storing K/m pieces of data, which are located in adjacent K/m first storage units in the bank and are located at the same order, in the same second storage unit of the second memory (S20). By means of the method, the step of rearranging data does not occupy extra time, thereby improving the efficiency of data reading.

## Description

This application claims the priority of the Chinese patent application No. 202311700987.3 filed on December 12, 2023. The entire contents disclosed in the aforementioned Chinese patent application are hereby incorporated by reference as part of this application.

### TECHNICAL FIELD

Embodiments of the present disclosure relate to a method for data transmission, an apparatus for data transmission and an electronic device.

### BACKGROUND

In matrix operation, due to the reusability the data of two input matrixes (for example, a matrix A and a matrix B), in the operation process, the data is generally read into a Local Share Memory (LSM, or "local memory" for short) from an external memory such as a Double-Data-Rate Synchronous Dynamic Random-Access Memory (DDR), then is read into a general register from the LSM, and then is sent to a matrix operation unit for operation; and the result is written back to the external memory DDR after the operation is completed.

### SUMMARY

At least one embodiment of the present disclosure provides a method for data transmission, for transmitting data from a first memory to a second memory, in which the first memory includes a bank with a depth of N, and a width of first memory units of the bank on each depth is K bits, the second memory includes a plurality of second memory units continuously arranged, and a width of a second memory unit is K bits, and the method including: sequentially reading data stored in the first memory units on each depth in N depths, and sequentially storing data in the N depths into a buffer unit, in which the data has m bits, and each first memory unit is divided into K/m sub-data units from low bits to high bits according to the m bits, in which N, K and m are positive integers; and writing data in the bank into the second memory from the buffer unit according to a specified sequence, in which the specified sequence includes: K/m data at an equal bit position in adjacent K/m first memory units in the bank is stored in an equal second memory unit of the second memory.

For example, in the method provided by an embodiment of the present disclosure, data stored in the first memory units with low depth in the adjacent K/m first memory units in the bank is located at a low bit in the second memory unit.

For example, in the method provided by an embodiment of the present disclosure, the sequentially reading data stored in the first memory units on each depth in N depths, includes: sequentially reading the data stored in the first memory units on each depth in the N depths according to a depth sequence, and parallelly reading data in K/m sub-data units stored in an equal first memory unit.

For example, in the method provided by an embodiment of the present disclosure, the buffer unit includes a plurality of buffer regions, each buffer region is configured to store one m-bit data, and a number of the plurality of buffer regions is greater than or equal to K/m.

For example, in the method provided by an embodiment of the present disclosure, the buffer unit includes (K/m)² buffer regions which are continuously arranged; and the writing data in the bank into the second memory from the buffer unit according to a specified sequence, includes: after sequentially storing data in first memory units for K/m depths into the buffer unit, starting to read data in K/m sub-data units at an equal bit position in the adjacent K/m first memory units in the bank from the buffer unit.

For example, in the method provided by an embodiment of the present disclosure, the after sequentially storing data in first memory units for K/m depths into the buffer unit, starting to read data in K/m sub-data units at an equal bit position in the adjacent K/m first memory units in the bank from the buffer unit, includes: after sequentially storing the data in the first memory units for the K/m depths into the buffer unit, parallelly reading the data in the K/m sub-data units at the equal bit position in the adjacent K/m first memory units in the bank; and writing the data in the K/m sub-data units at the equal bit position in the adjacent K/m first memory units into the equal second memory unit of the second memory.

For example, in the method provided by an embodiment of the present disclosure, a plurality of sub-data units in the bank are continuously indexed and numbered according to a sequence from low to high in depth and a sequence from low to high in bit position; the after sequentially storing the data in the first memory units for the K/m depths into the buffer unit, parallelly reading the data in the K/m sub-data units at the equal bit position in the adjacent K/m first memory units in the bank, includes: from a 1st cycle to a (K/m)^{th} cycle, reading data in sub-data units with index numbers of (i-1) × K/m, ..., K/m × i-1 from the bank in each cycle, and storing into the buffer unit, in which i represents a cycle count value; and from a (K/m+1)^{th} cycle, for each cycle, while reading data in sub-data units with the index number of (i-1) × K/m, ..., K/m × i-1 and storing into the buffer unit, parallelly reading the K/m data at the equal bit position in the adjacent K/m first memory units in the bank from the buffer unit.

At least one embodiment of the present disclosure provides an apparatus for data transmission, configured to transmit data from a first memory to a second memory, in which the first memory includes a bank with a depth of N, and a width of first memory unit of the bank on each depth is K bits, the second memory includes a plurality of second memory units continuously arranged, and a width of a second memory unit is K bits, and the apparatus including: a buffer unit; a reading unit, configured to sequentially read data stored in the first memory unit on each depth in N depths, and sequentially store data in the N depths into the buffer unit, in which the data has m bits, and each first memory unit is divided into K/m sub-data units from low bits to high bits according to the m bits; and a writing unit, configured to write data in the bank into the second memory from the buffer unit according to a specified sequence, in which the specified sequence includes: K/m data at an equal bit position in adjacent K/m first memory unit in the bank is stored in an equal second memory unit of the second memory, in which N, K and m are positive integers.

For example, in the apparatus provided by an embodiment of the present disclosure, the buffer unit includes a plurality of registers, and each register is configured to store data read from the first memory unit; the reading unit includes a plurality of first multiplexers, and the plurality of first multiplexers are configured to read data stored in the first memory unit on each depth in N depths of each bank, and sequentially store the data stored in the first memory unit in each depth into K/m registers in the plurality of registers; and the writing unit includes a plurality of second multiplexers, and the plurality of second multiplexers are configured to select the K/m data at the equal bit position in the adjacent K/m first memory unit in the bank from the plurality of registers, and write into the equal second memory unit of the second memory.

For example, in the apparatus provided by an embodiment of the present disclosure, the first memory includes P banks, a number of buffer units is P, and each buffer unit includes a preset number of registers; the P banks and P buffer units are in one-to-one correspondence, in which P is a positive integer.

For example, in the apparatus provided by an embodiment of the present disclosure, the preset number is a positive integer greater than or equal to K/m.

At least one embodiment of the present disclosure provides an electronic device, including: the apparatus for data transmission provided by any embodiment of the present disclosure, the first memory, and the second memory, in which the first memory is coupled with the apparatus for data transmission, and the apparatus for data transmission is coupled with the second memory.

### BRIEF DESCRIPTION OF DRAWINGS

In order to more clearly illustrate the technical solutions of the embodiments of the present disclosure, the following will provide a brief introduction to the drawings of the embodiments. It is apparent that the drawings described below only relate to some embodiments of the present disclosure, rather than limiting the present disclosure.
FIG. 1A is a schematic diagram of dot product of rows of a matrix A and columns of a matrix B in a matrix multiplication operation;
FIG. 1B is a schematic diagram of data flow in a matrix operation;
FIG. 1C is a schematic diagram of arrangement of matrix data in an external memory and a local memory in a column direction;
FIG. 1D is a schematic diagram of arrangement of matrix data in a bank in a local memory in a column direction;
FIG. 2A is a flowchart of a method for data transmission provided by at least one embodiment of the present disclosure;
FIG. 2B is a schematic system architecture diagram of execution of a method for data transmission provided by at least one embodiment of the present disclosure;
FIG. 3A-FIG. 3G are schematic diagrams of a method for rearranging data with a 16bit data format provided by at least one embodiment of the present disclosure;
FIG. 4A-FIG. 4M are schematic diagrams of a method for rearranging data with a 8bit data format provided by at least one embodiment of the present disclosure;
FIG. 5 is a schematic block diagram of an apparatus for data transmission provided by at least one embodiment of the present disclosure;
FIG. 6A is a schematic structural diagram of an apparatus for data transmission in FIG. 5 provided by at least one embodiment of the present disclosure;
FIG. 6B is a schematic structural diagram of another apparatus for data transmission provided by at least one embodiment of the present disclosure; and
FIG. 7 is a schematic diagram of an electronic device provided by at least one embodiment of the present disclosure.

### DETAILED DESCRIPTION

To clarify the objectives, technical solutions, and advantages of the embodiments of the present disclosure, the technical solutions of the embodiments will be described clearly and comprehensively below in conjunction with the accompanying drawings of the present disclosure. Evidently, the described embodiments represent only a portion of the embodiments of the present disclosure, not all of them. Based on the embodiments described herein, all other embodiments obtained by those of ordinary skill in the art without creative effort shall fall within the scope of protection of the present disclosure.

Unless otherwise defined, technical or scientific terms used in the present disclosure shall carry the ordinary meanings understood by persons of general skill in the field to which this disclosure pertains. The terms "first," "second," and similar expressions used herein do not denote any order, quantity, or importance but are solely used to distinguish between different components. Similarly, terms such as "a," "an," or "the" do not imply quantitative limitations but indicate the existence of at least one referenced item. The terms "comprise," "include," or similar expressions mean that the elements or items preceding these terms cover the listed elements or items and their equivalents, without excluding other elements or items. Terms such as "connect," "link," or similar expressions are not limited to physical or mechanical connections but may include electrical connections, whether direct or indirect. Terms like "upper," "lower," "left," "right," etc., describe relative positional relationships and may change accordingly if the absolute position of the described object is altered.

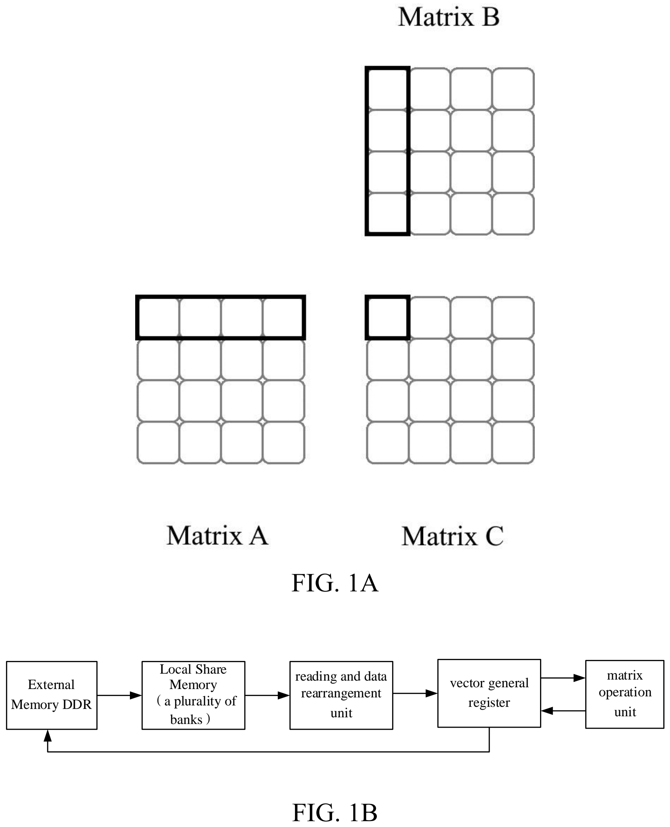

FIG. 1A is a schematic diagram of dot product of rows of a matrix A and columns of a matrix B in a matrix multiplication operation.

Data for matrix operation is generally linearly arranged in an external memory in a matrix row direction or a matrix column direction, as shown in FIG. 1A, in a matrix multiplication operation C=C+A*B, it is needed to carry out dot product on each row of data in the matrix A and each column of data in the matrix B, and then elements at corresponding positions in a matrix C are updated. Therefore, in response to that the data in the matrix A is linearly arranged in the external memory in the column direction, it is needed to rearrange the data in the matrix A, so that dot product needs to be carried out on each row of data in the matrix A and each column of data in the matrix B.

FIG. 1B is a schematic diagram of data flow in a matrix operation.

As shown in FIG. 1B, for example, the matrix A is stored in an external memory DDR, the matrix A is read into an LSM from the external memory DDR, and then is read into a reading and data rearrangement unit from the LSM for reorganizing and rearranging, for example, the data organized in the column direction is reorganized in the row direction. The recombined and rearranged data is sent to a vector general register (also called as a "vector register") array, and then is sent to a matrix operation unit for operation, and the result is written back to the external memory DDR after the operation is completed. The LSM is generally a RAM array composed of a Static Random Access Memory (SRAM) using a plurality of banks, and it can support a relatively large read-write data bit width.

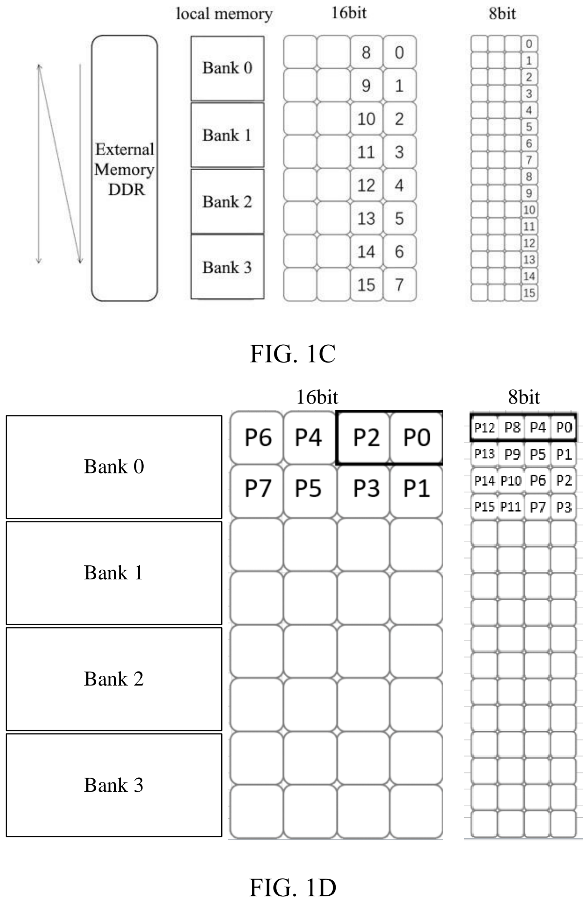

FIG. 1C is a schematic diagram of arrangement of matrix data in an external memory and a local memory in a column direction; and FIG. 1D is a schematic diagram of arrangement of matrix data in a bank in a local memory in a column direction.

As shown in FIG. 1C and FIG. 1D, the LSM generally includes a plurality of banks, such as a bank 0, a bank 1, a bank 2, and a bank 3, and the plurality of banks are independent of one another. Each bank includes a plurality of memory units located at different depths, and the bit width of each memory unit can be 32 bits, 16 bits or 8 bits and the like. In the embodiment of the present disclosure, the bit width being 32 bits of each bank is taken as an example for description. For example, in response to that the bit width of the memory units is 32 bits, each memory unit can store 2 16bit data or matrix elements. In the embodiment of the present disclosure, the depths of the memory units are sequentially increased from right to left, and the depth of the memory unit on the rightmost side in FIG. 1D is 0. For example, an element 0 in the matrix A is stored at a low 16-bit P0 of the memory unit with the depth of 0 in the bank 0, and an element 1 in the matrix A is stored at a high 16-bit P1; an element 8 in the matrix A is stored at a low 16-bit P2 of the memory unit with the depth of 1 in the bank 0, and an element 9 in the matrix A is stored at a high 16-bit P3; an element 16 in the matrix A is stored at a low 16-bit P4 of the memory unit with the depth of 2 in the bank 0, and an element 17 in the matrix A is stored at a high 16-bit P5; and an element 24 in the matrix A is stored at a low 16-bit P6 of the memory unit with the depth of 3 in the bank 0, and an element 25 in the matrix A is stored at a high 16-bit P7. Other banks of the local memory, such as the bank 1, the bank 2 and the bank 3, are similar to the bank 0, which will not be listed. Referring to FIG. 1C and FIG. 1D, for example, the element 2 in the matrix A is stored at the low 16-bit in the memory unit with the depth of 0 in the bank 1, and other elements are stored in similar ways.

Similarly, the data format of the elements in the matrix A can also be 8bit, and under this condition, each memory unit can store 4 elements. For example, the element 0 in the matrix A is stored at a low 8-bit P0 in the memory unit with the depth of 0 in the bank 0, the element 1 is stored at 8^{th}-15^{th}-bit P1 in the memory unit with the depth of 0 in the bank 0, the element 2 is stored at 16^{th}-23^{rd}-bit P2 in the memory unit with the depth of 0 in the bank 0, and the element 3 is stored at 24^{th}-31^{st}-bit P3 in the memory unit with the depth of 0 in the bank 0. For example, the element 16 in the matrix A is stored at a low 8-bit P4 in the memory unit with the depth of 1 in the bank 0, and similarly, the elements 17-19 in the matrix A are stored at P5-P7 in the memory unit respectively. Similarly, 4 elements in the matrix A are stored at P8-P11 in the memory unit with the depth of 2 in the bank 0 respectively, and 4 elements in the matrix A are stored at P12-P15 in the memory unit with the depth of 3 in the bank 0 respectively.

As shown in FIG. 1C and FIG. 1D, in response to that the data in the matrix A are stored in the external memory DDR in the column direction, after the data are read into the LSM from the external memory DDR, the data are still stored in the column direction in the LSM. For example, in response to that the data format of each element in the matrix A is 16bit, the elements 0-15 occupy the storage space of two columns of the local memory; and in response to that the data format of each element in the matrix A is 8bit, the elements 0-15 occupy the storage space of 1 column of the local memory. Similarly, in response to that the data format of each element in the matrix A is 4bit, the elements 0-15 occupy the storage space of 1/2 column of the local memory. Therefore, it is needed to reorganize the data, thus the data can be read in a format in the row direction, and then are sent to the operation unit, which facilitates matrix multiplication operation.

As shown in FIG. 1B-FIG. 1D, in the matrix operation, it is needed to read the matrix data from the local memory and store the matrix data in the reading and data rearrangement unit, then the matrix data are rearranged by the reading and data rearrangement unit, and the rearrangement of the matrix data takes up extra time, so the reading efficiency of the matrix data is low.

It is to be noted that although the embodiment of the present disclosure takes the matrixes as an example to illustrate that data rearrangement takes up extra time, it does not mean that the present invention is only applied to rearranging the matrix data, and the embodiment of the present disclosure can be applied to any data that needs to be rearranged, not limited to the matrix data.

At least one embodiment of the present disclosure provides a method for data transmission, an apparatus for data transmission and an electronic device. The method for data transmission is to transmit data from a first memory to a second memory; the first memory includes a bank with the depth of N, and the width of first memory units of the bank on each depth is K bits; and the second memory includes a plurality of second memory units which are continuously arranged, and the width of each second memory unit is K bits. The method includes: sequentially reading data stored in the first memory unit on each depth in N depths, and sequentially storing the data in the N depths into a buffer unit, in which the data has m bits, and each first memory unit is divided into K/m sub-data units from low bits to high bits according to the m bits; and writing the data in the bank into the second memory from the buffer unit according to a specified sequence, in which, the specified sequence includes: K/m data at the equal bit position in adjacent K/m first memory units in the bank is stored in the equal second memory unit of the second memory, and N, K and m are positive integers. According to the method for data transmission, the data can be rearranged in the data reading process, so that the step of rearranging the data does not take up extra time, and the data reading efficiency is improved.

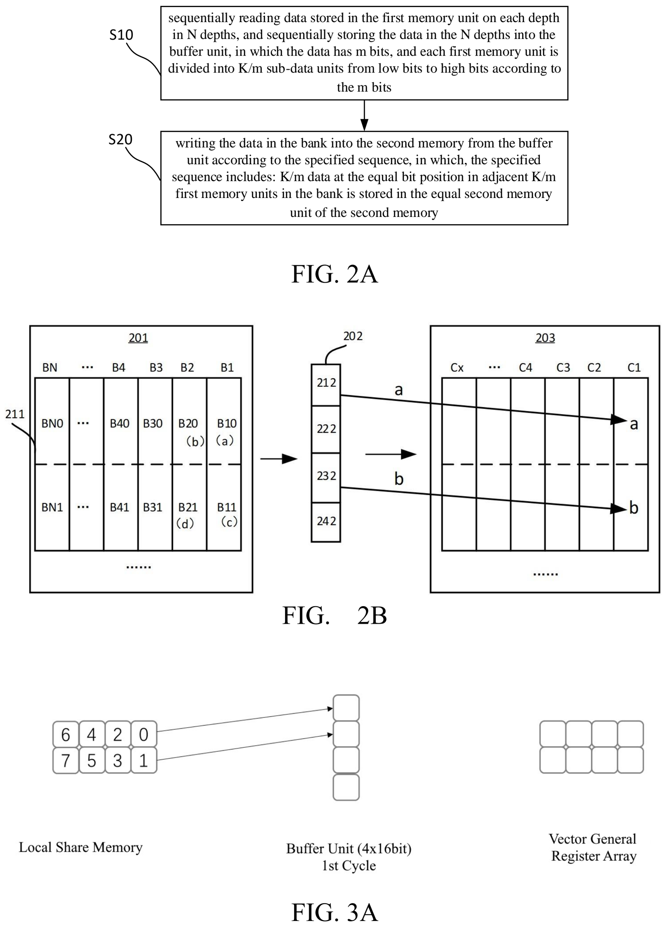

FIG. 2A is a flowchart of a method for data transmission provided by at least one embodiment of the present disclosure.

As shown in FIG. 2A, the method can include steps S10-S20. The method for data transmission is to transmit data from the first memory to the second memory; the first memory includes the bank with the depth of N, and the width of the first memory units of the bank on each depth is K bits; and the second memory includes the plurality of second memory units which are continuously arranged, and the width of each second memory unit is K bits.

Step S10: sequentially reading data stored in the first memory unit on each depth in N depths, and sequentially storing the data in the N depths into the buffer unit, in which the data has m bits, and each first memory unit is divided into K/m sub-data units from low bits to high bits according to the m bits.

Step S20: writing the data in the bank into the second memory from the buffer unit according to the specified sequence, in which, the specified sequence includes: K/m data at the equal bit position in adjacent K/m first memory units in the bank is stored in the equal second memory unit of the second memory.

FIG. 2B is a schematic system architecture diagram of execution of a method for data transmission provided by at least one embodiment of the present disclosure.

As shown in FIG. 2B, the system includes a memory 201, a buffer unit 202 and a memory 203. The memory 201 is an example of the first memory, and the memory 203 is an example of the second memory. The memory 201 is, for example, the LSM as shown in FIG. 1C and FIG. 1D, and the memory 203 is, for example, the vector general register as shown in FIG. 1B.

The memory 201 include at least one bank 211 (example of the bank) with the depth of N, only one bank 211 is shown in FIG. 2B as an example, and actually, as shown in FIG. 1D and FIG. 1C, the LSM may include a plurality of banks. Each depth is treated as one memory unit, and N first memory units are arranged in the row direction, for example, the bank 211 includes a memory unit B1, a memory unit B2, a memory unit B3, a memory unit B4... and a memory unit BN (hereinafter referred to as memory units B1-BN), the memory units B1-BN are examples of the first memory units respectively, and the memory units B1-BN are sequentially arranged.

The width of each memory unit in the N depths is K bits, that is, the bit width of the memory unit is K bits, and K-bit data can be stored. For example, the memory units B1-BN respectively include K bits.

In some embodiments, for example, the format of data stored in the memory 201 is m bits, each memory unit is divided into K/m sub-data units from low bits to high bits according to the m bits, and each sub-data unit is used for storing one m-bit data. For example, in response to that data in the matrix A is stored in the memory 201, each element in the matrix A is in an m-bit data format, for example, the memory unit B1 is divided into K/m sub-data units according to the sequence from low bits to high bits, and each sub-data unit is used for storing one element in the matrix A. The 0^{th}-(m-1)^{th} bits are first sub-data units and are used for storing one element in the matrix A, and the 0^{th}-(2m-1^{th} bits are second sub-data units and are used for storing another element in the matrix A.

For example, in the example of K=32 and m=16, each memory unit is divided into 2 sub-data units. For example, the memory unit B1 is divided into sub-data units B10 and B11, the sub-data unit B10 is, for example, used for storing the element 0 in the matrix A, and the sub-data unit B11 is, for example, used for storing the element 1 in the matrix A; the memory unit B2 is divided into sub-data units B20 and B21, the sub-data unit B20 is, for example, used for storing the element 8 in the matrix A, and the sub-data unit B21 is, for example, used for storing the element 9 in the matrix A; and the memory unit B3 is divided into sub-data units B30 and B31, the memory unit B4 is divided into sub-data units B40 and B41, and the memory unit BN is divided into sub-data units BN0 and BN1.

Similarly, the second memory 203 includes a plurality of continuous second memory units, such as a memory unit C1, a memory unit C2, a memory unit C3, a memory unit C4... and a memory unit Cx, and each memory unit is used for storing Kbit data. In response to that the format of the data stored in the second memory 203 is m bits, one memory unit can also store K/m data. The capacity of the second memory 203 can be the same as that of the first memory 201 (for example, x=N), and can also be different.

The buffer unit 202 can include a plurality of buffer regions, and the number of the buffer regions can be determined according to the data format of the matrix and whether parallelly reading is carried out. In some embodiments of the present disclosure, the plurality of buffer units and the plurality of storage bodies are in one-to-one correspondence.

In some embodiments of the present disclosure, each buffer region is used for storing m-bit data, and the number of the buffer regions corresponding to each bank is greater than or equal to K/m.

For example, in response to that a single bank is 32bit in bit width, each memory unit is 32 bits, and each memory unit includes 2 16bit data formats; in order to realize transformation from matrix row to matrix column or from matrix column to matrix row, it is needed to perform operation on at least 2 16bit in each column; and each buffer unit may include (32/16)=2 buffer regions, and in response to that the first memory includes M (M is a positive integer) banks, 2*M buffer regions are needed in total. Correspondingly, for a 8bit data format, each buffer unit may include (32/8)=4 buffer regions. Correspondingly, for a 4bit data format, each buffer unit may include (32/4)=8 buffer regions.

In other embodiments of the present disclosure, in order to realize parallel processing, the number of the buffer regions can be increased, and the number of the buffer regions in each buffer unit is greater than K/m. For example, each buffer unit includes (K/m)² buffer regions which are continuously arranged.

For example, for a 16bit data format, each buffer unit 202 may include 4 buffer regions, and each buffer region stores 16bit; for the 8bit data format, each buffer unit 202 may include 16 buffer regions, and each buffer region stores 8bit; and for the 4bit data format, each buffer unit 202 may include 64 buffer regions, and each buffer region stores 4bit.

In step S10 in FIG. 2A, for example, the data stored in N memory units are sequentially read according to the sequence number of the memory units from low to high. In some embodiments of the present disclosure, the data stored in the first memory unit on each depth in the N depths are sequentially read according to the depth sequence, and the data in the K/m sub-data units stored in the equal first memory unit are subjected to parallel reading. That is, the data in the K/m sub-data units stored in the first memory unit in the equal depth are subjected to parallel reading. For example, the data in the memory units B1-BN are sequentially read, and the two data in each memory unit are read at the same time. For example, after the data in the sub-data unit B10 and the sub-data unit B11 are read at the same time, the data in the sub-data unit B20 and the sub-data unit B21 are read at the same time, and so on. The reading efficiency can be improved by parallelly reading the data in the equal depth.

For example, 32bit data are read in each cycle, and the 32bit data are stored in the buffer unit. For example, each bank corresponds to 4 buffer regions; in the 1^{st} cycle, the data in the sub-data units B10 and B11 in the memory unit B1 are subjected to parallel reading, and the data in the sub-data unit B10 and the sub-data unit B11 are respectively stored in a buffer region 212 and a buffer region 222 of the buffer unit 202; and in the 2^{nd} cycle, the data in the sub-data unit B20 and the sub-data unit B21 in the memory unit B2 are subjected to parallel reading, and the sub-data unit B20 and the sub-data unit B21 are respectively stored in a buffer region 232 and a buffer region 242 of the buffer unit 202.

In step S20 in FIG. 2A, K/m data are read from the buffer unit according to the specified sequence and written into, for example, the vector general register. The specified sequence can be that the K/m data at the equal bit position in the adjacent K/m first memory units in the bank are stored in the equal second memory unit of the vector general register. That is, the K/m data are read from the buffer unit every cycle, the K/m data are in the adjacent K/m first memory units, and the K/m data are at the equal bit position s in the adjacent K/m first memory units. For example, the K/m data are all at the s^{th} bit to the t^{th} bit in the first memory units. The s and t are both positive integers.

For example, in response to that K bit=32bit, m bit=16bit, 2 data are read from the buffer unit every cycle, and the 2 data are in the 2 adjacent first memory units and are at the equal bit position in the first memory units. For example, two data located in the memory units B1 and B2 respectively are read from the buffer unit in one cycle, the two data are located at the s^{th} bit to the t^{th} bit of the memory units B1 and B2 respectively, for example, the two data are data in the sub-data unit B10 (0^{th} bit to 15^{th} bit) and the sub-data unit B20 (0^{th} bit to 15^{th} bit) respectively, or are data in the sub-data unit B11 (16^{th} bit to 32^{nd} bit) and the sub-data unit B21 (16^{th} bit to 32^{nd} bit) respectively.

For example, the data stored in the sub-memory unit B10 are a, the data stored in the sub-memory unit B11 are b, and the data a and the data b in the buffer regions 212 and 232 are respectively read from the buffer unit 202 and stored in the second memory unit C1.

For example, the data stored in the first memory units with low depth in the adjacent K/m first memory units in the bank are at low bit in the second memory units. The memory usually stores the data in a sequence from low to high in depth, the data stored in the first memory units in the low depth are stored at the low bit in the second memory units, and therefore the arrangement sequence of the K/m data is not changed.

For example, the depth of the sub-data unit B10 is smaller than that of the sub-data unit B20, the data a in the sub-data unit B10 are stored at low bit in the memory unit C1, and the data b in the sub-data unit B20 is stored at high bit in the memory unit C1.

In some embodiments of the present disclosure, the buffer unit includes (K/m)² buffer regions which are continuously arranged. The buffer unit includes (K/m)² buffer regions which are continuously arranged, parallelly reading and writing can be achieved, and the number of the buffer regions can be reduced.

In some embodiments of the present disclosure, for example, after the data in the first memory units for the K/m depths are sequentially stored in the buffer units, the data in the K/m sub-data units at the equal bit position in the adjacent K/m first memory units in the bank is read from the buffer units.

For example, in an example of (K/m)=2, after the data in the first memory units of 2 depths are sequentially stored in the buffer units, the data in 2 sub-data units at the equal bit position in 2 adjacent first memory units in the bank are read from the buffer units. For example, as shown in FIG. 2B, in the 1^{st} cycle, two data a and c in the memory unit B1 are stored in the buffer region 212 and the buffer region 222 respectively, and in the 2^{nd} cycle, two data b and d in the memory unit B2 are stored in the buffer region 232 and the buffer region 242 respectively. Then, after the 2^{nd} cycle, the data a and the data b are read from the buffer unit 202.

In some embodiments of the present disclosure, after the data for the K/m depths are sequentially stored in the buffer units, the data in the K/m sub-data units at the equal bit position in the adjacent K/m first memory units in the bank are subjected to parallel reading; and the data in the K/m sub-data units at the equal bit position in the adjacent K/m first memory units are written into the equal second memory unit of the second memory.

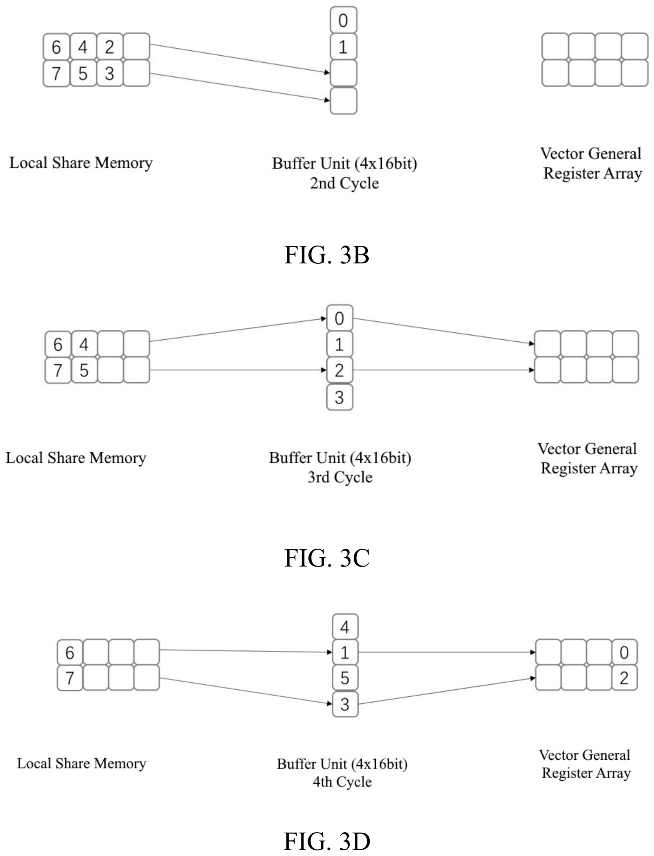

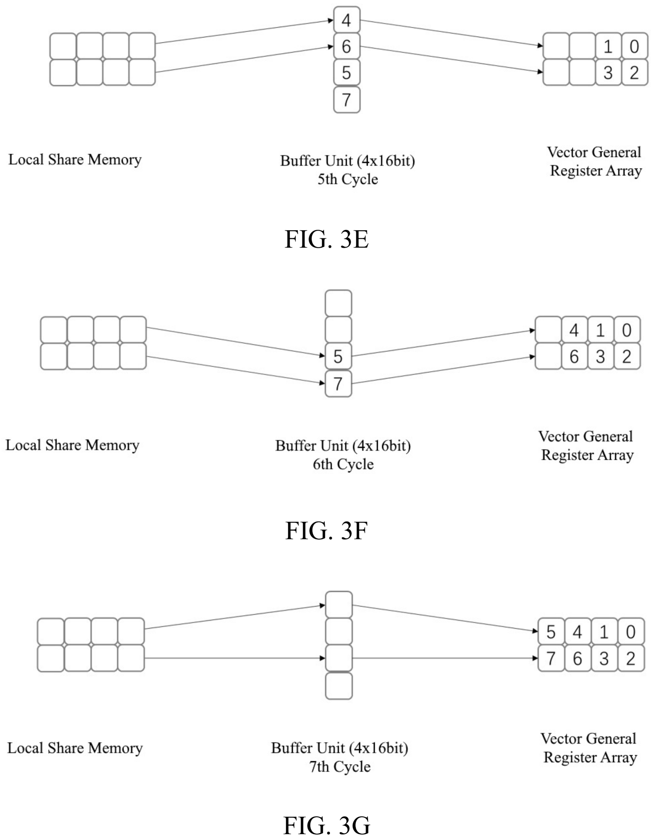

For example, the plurality of sub-data units in the bank are continuously indexed and numbered according to the sequence from low to high in depth and the sequence from low to high in bit position, and after sequentially storing the data in the first memory units for the K/m depths into the buffer units, parallelly reading the data in the K/m sub-data units at the equal bit position in the adjacent K/m first memory units in the bank includes: from the 1^{st} cycle to the (K/m)^{th} cycle, reading data with the index number of (i-1) x K/m...K/m x i-1 from the bank in each cycle, and storing in the buffer units, in which i represents a cycle count value; from the (K/m +1)^{th} cycle, for each cycle, while reading data with the index number of (i-1) x K/m...K/m x i-1, and storing in the buffer units, parallelly reading K/m data at the equal bit position in the adjacent K/m first memory units in the bank from the buffer units. The method is described below in combination with the embodiments in FIG. 3A-FIG. 3G.

FIG. 3A-FIG. 3G are schematic diagrams of a method for rearranging data with a 16bit data format provided at least one embodiment of the present disclosure. FIG. 3A-FIG. 3G are schematic diagrams of only one bank, and similar operation is executed on each bank in the LSM.

As shown in FIG. 3A, the plurality of first memory units of one bank in the LSM are continuously indexed and numbered according to the sequence from low to high in depth and the sequence from low to high in bit position, for example, the index numbers are shown as an index 0, an index 1, an index 2, an index 3, an index 4, an index 5, an index 6 and an index 7.

In response to that the data format is m bit=16bit, and K bit=32 bit, (K/m)=2.

In the 1^{st} cycle (i=1), data of the index 0 and the index 1 are read from each memory and sent to the buffer region.

In the 2^{nd} cycle (i=2), data of the index 2 and the index 3 are read from each bank and sent to the buffer region.

In the 3^{rd} cycle (i=3), data of the index 4 and the index 5 are read from each bank and sent to the buffer region. Moreover, data of the index 0 and the index 2 are read from the buffer region and sent to the vector general register array.

In the 4^{th} cycle (i=4), data of the index 6 and the index 7 are read from each bank and sent to the buffer region. Moreover, data of the index 1 and the index 3 are read from the buffer region and sent to the vector general register array.

In the 5^{th} cycle (i=5), data of the index 8 and the index 9 are read from each bank and sent to the buffer region. Moreover, data of the index 4 and the index 6 are read from the buffer region and sent to the vector general register array.

In the 6^{th} cycle (i=6), data of the index 10 and the index 11 are read from each bank and sent to the buffer region. Moreover, data of the index 5 and the index 7 are read from the buffer region and sent to the vector general register array.

In the 7^{th} cycle (i=7), data of the index 12 and the index 13 are read from each bank and sent to the buffer region. Moreover, data of the index 8 and the index 10 are read from the buffer region and sent to the vector general register array. Except different read and written index data, the control logic of hardware is the same as that in the 3^{rd} cycle.

In the whole execution process, the data are read from the LSM in the "column direction" of the matrix, combined in the "row direction" and then written into the vector memory array.

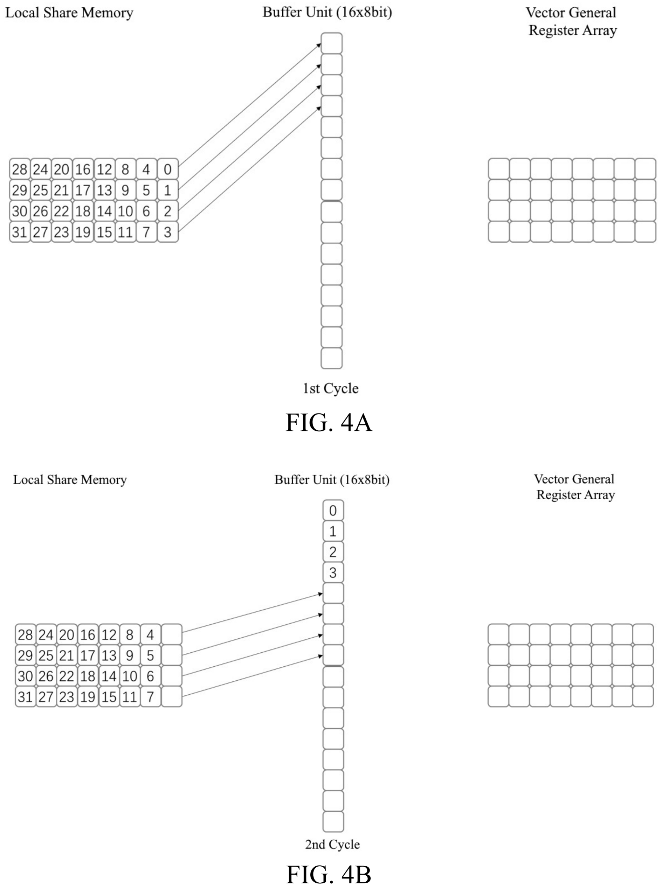

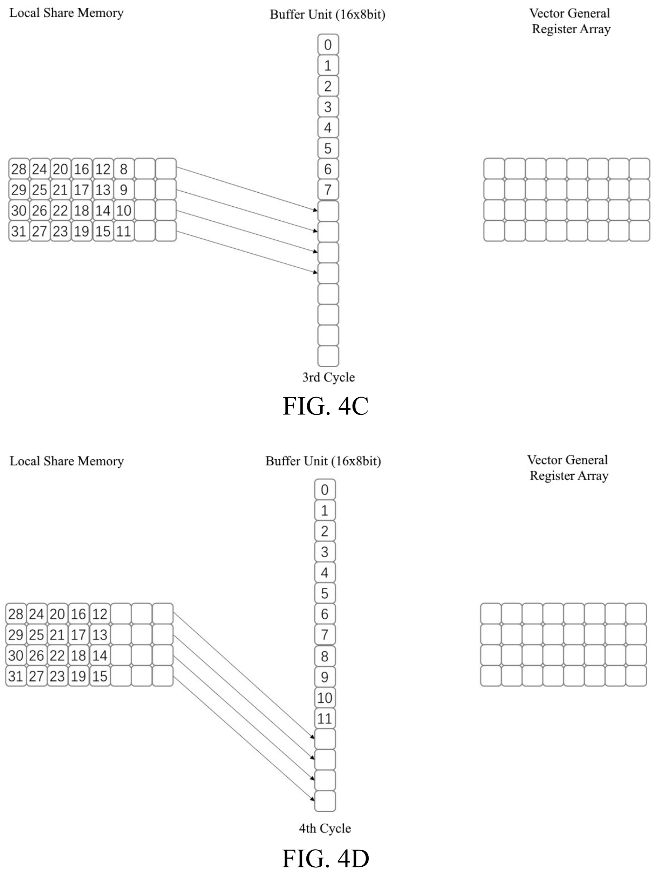

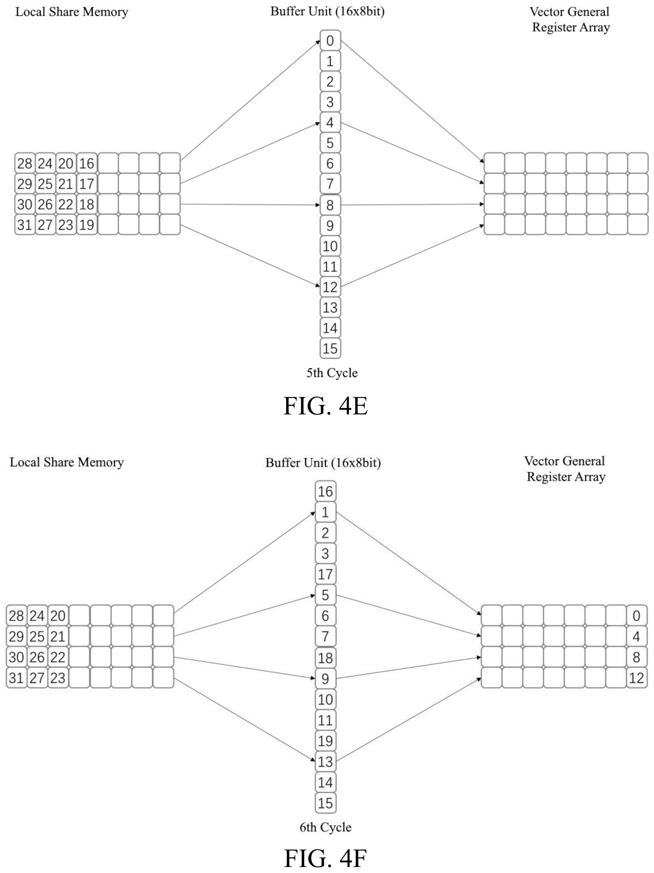

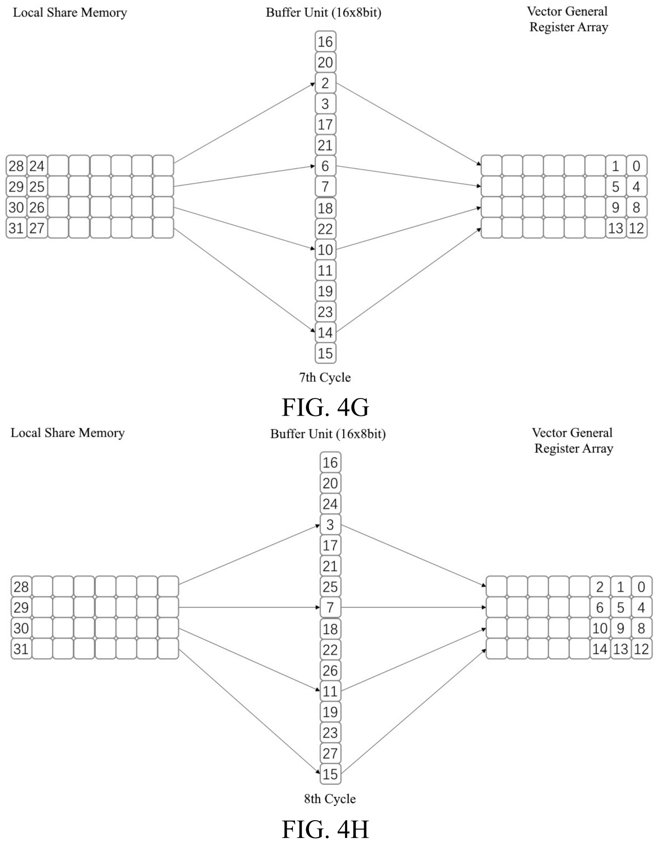

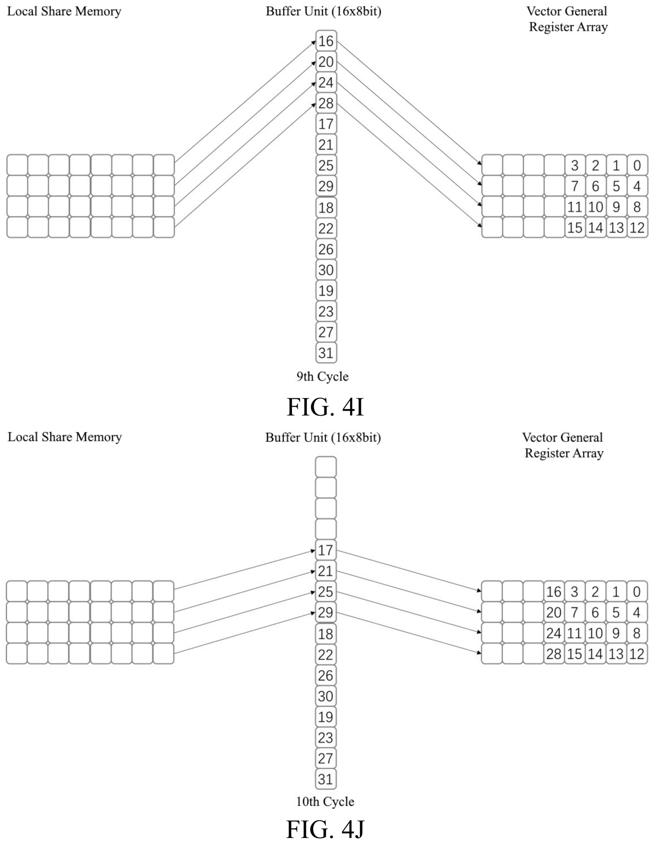

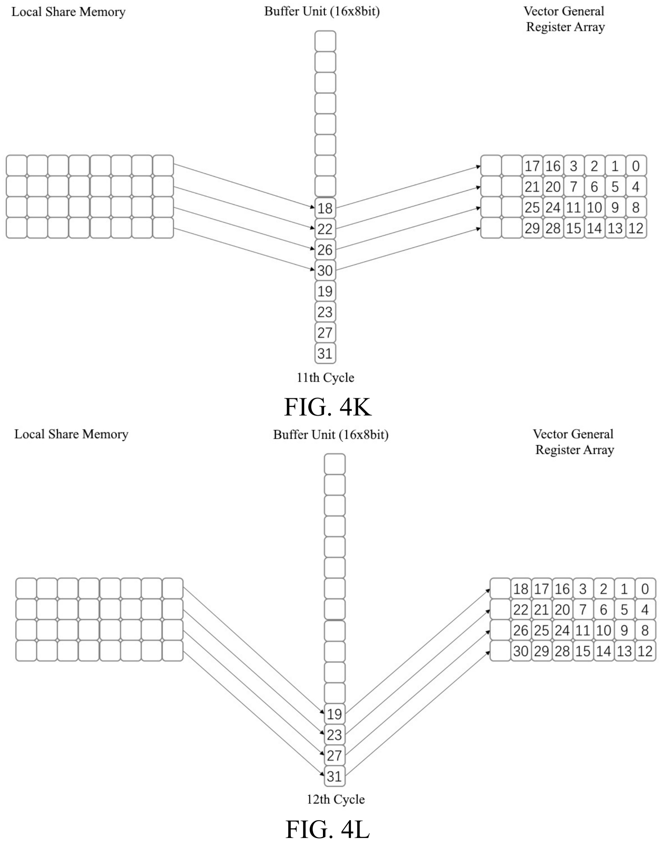

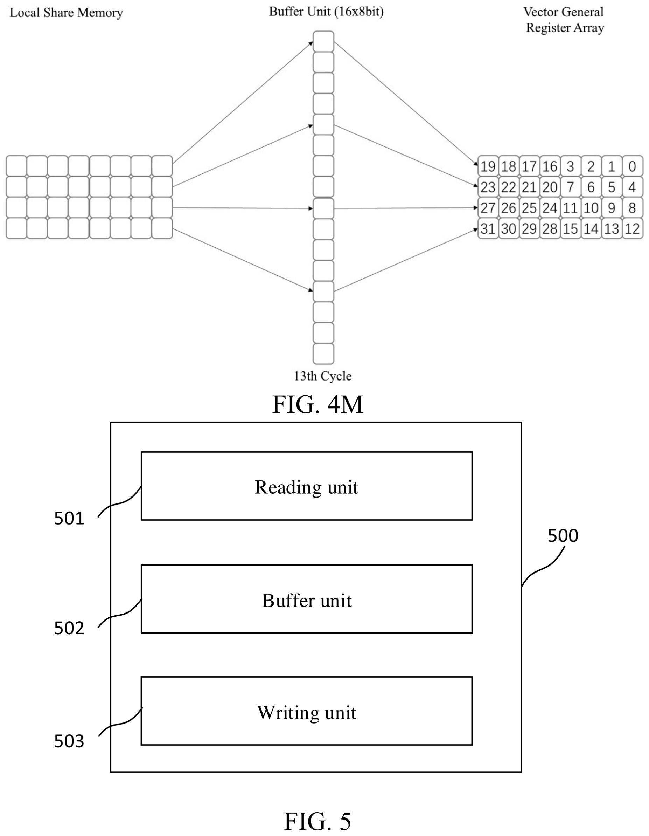

FIG. 4A-FIG. 4M are schematic diagrams of a method for rearranging data with an 8bit data format provided by at least one embodiment of the present disclosure. FIG. 4A-FIG. 4M are schematic diagrams of only one bank, and similar operation is executed on each bank in the LSM.

In response to that the data format is m=8, and K=32, (K/m)=4.

In the 1^{st} cycle (i=1), data of the index 0, the index 1, the index 2 and the index 3 are read from each bank and sent to the buffer region.

In the 2^{nd} cycle (i=2), data of the index 4, the index 5, the index 6 and the index 7 are read from each bank and sent to the buffer region.

In the 3^{rd} cycle (i=3), data of the index 8, the index 9, the index 10 and the index 11 are read from each bank and sent to the buffer region.

In the 4^{th} cycle (i=4), data of the index 12, the index 13, the index 14 and the index 15 are read from each bank and sent to the buffer region.

In the 5^{th} cycle (i=5), data of the index 16, the index 17, the index 18 and the index 19 are read from each bank and sent to the buffer region. Moreover, data of the index 0, the index 4, the index 8 and the index 12 are read from the buffer region and sent to the vector general register array.

In the 6^{th} cycle (i=6), data of the index 20, the index 21, the index 22 and the index 23 are read from each bank and sent to the buffer region. Moreover, data of the index 1, the index 5, the index 9 and the index 13 are read from the buffer region and sent to the vector general register array.

In the 7^{th} cycle (i=7), data of the index 24, the index 25, the index 26 and the index 27 are read from each bank and sent to the buffer region. Moreover, data of the index 2, the index 6, the index 10 and the index 14 are read from the buffer region and sent to the vector general register array.

In the 8^{th} cycle (i=8), data of the index 28, the index 29, the index 30 and the index 31 are read from each bank and sent to the buffer region. Moreover, data of the index 3, the index 7, the index 11 and the index 15 are read from the buffer region and sent to the vector general register array.

In the 9^{th} cycle (i=9), data of the index 32, the index 33, the index 34 and the index 35 are read from each bank and sent to the buffer region. Moreover, data of the index 16, the index 20, the index 24 and the index 28 are read from the buffer region and sent to the vector general register array.

In the 10^{th} cycle (i=10), data of the index 36, the index 37, the index 38 and the index 39 are read from each bank and sent to the buffer region. Moreover, data of the index 17, the index 21, the index 25 and the index 29 are read from the buffer region and sent to the vector general register array.

In the 11^{th} cycle (i=11), data of the index 40, the index 41, the index 42 and the index 43 are read from each bank and sent to the buffer region. Moreover, data of the index 18, the index 22, the index 26 and the index 30 are read from the buffer region and sent to the vector general register array.

In the 12^{th} cycle (i=12), data of the index 44, the index 45, the index 46 and the index 47 are read from each bank and sent to the buffer region. Moreover, data of the index 19, the index 23, the index 27 and the index 31 are read from the buffer region and sent to the vector general register array.

In the 13^{th} cycle (i=13), data of the index 48, the index 49, the index 50 and the index 51 are read from each bank and sent to the buffer region. Moreover, data of the index 32, the index 36, the index 40 and the index 44 are read from the buffer region and sent to the vector general register array. Except different read and written index data, the control logic of hardware is the same as that in the 5^{th} cycle.

In the whole execution process, the data are read from the LSM in the "column direction" of the matrix, combined in the "row direction" and then written into the vector memory array.

In other embodiments of the present disclosure, in response to that the data format is m=4, and K=32, (K/m)=8; from the 1^{st} cycle to the 8^{th} cycle, data with the index number of (i-1) x K/m...K/m x i-1 is read out from the bank in each cycle, and stored in the buffer unit, in which i represents the cycle count value; and from the 9^{th} cycle, the data with the index number of (i-1) x K/m...K/m x i-1 is read out in each cycle, and is stored in the buffer unit, and meanwhile, 8 data at the equal bit position in 8 adjacent first memory units in the bank are subjected to parallel reading from the buffer unit. For m=4bit and K=32, the condition is similar to the implementation mode of m=8 and m=16, which will not be listed.

In another aspect, the present disclosure provides an apparatus for data transmission which is configured to transmit data from a first memory to a second memory; the first memory includes a bank with the depth of N, and the width of first memory units of the bank on each depth is K bits; and the second memory includes a plurality of second memory units which are continuously arranged, and the width of each second memory unit is K bits.

FIG. 5 is a schematic block diagram of an apparatus for data transmission 500 provided by at least one embodiment of the present disclosure.

As shown in FIG. 5, the apparatus for data transmission 500 includes a reading unit 501, a buffer unit 502, and a writing unit 503.

The reading unit 501 is configured to sequentially read data stored in the first memory units on each depth in N depths, and sequentially store the data in the N depths into a buffer unit 502, in which the data has m bits, and each first memory unit is divided into K/m sub-data units from low bits to high bits according to the m bits.

The writing unit 503 is configured to write the data in the bank into the second memory from the buffer unit according to a specified sequence, in which, the specified sequence includes: K/m data at the equal bit position in adjacent K/m first memory units in the bank is stored in the equal second memory unit of the second memory.

In some embodiments of the present disclosure, the buffer unit 502 includes a plurality of registers, the reading unit 501 includes a plurality of first multiplexers, and the writing unit 503 includes a plurality of second multiplexers. Each of the plurality of registers is configured to store the data read from the first memory units. The plurality of first multiplexers are configured to read the data stored in the first memory units on each depth in the N depths of each bank, and sequentially store the data stored in each memory unit in each depth to K/m register in the plurality of registers. The plurality of second multiplexers are configured to select K/m data at the equal bit position in the adjacent K/m first memory units in the bank from the plurality of registers, and write into the equal second memory unit of the second memory.

Each of the plurality of registers is treated as one abovementioned buffer region.

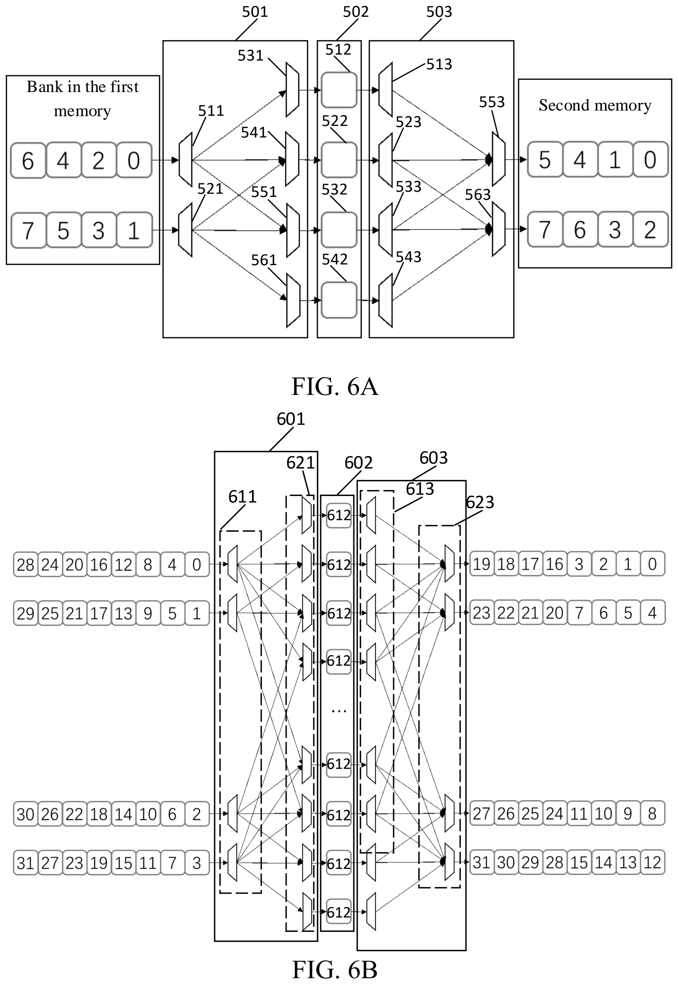

FIG. 6A is a schematic structural diagram of an apparatus for data transmission 500 in FIG. 5 provided by at least one embodiment of the present disclosure.

As shown in FIG. 6A, the reading unit 501 includes a plurality of multiplexers, and the plurality of multiplexers in the reading unit 501 are, for example, a multiplexer 511, a multiplexer 521, a multiplexer 531, a multiplexer 541, a multiplexer 551 and a multiplexer 561. The multiplexer 511, the multiplexer 521, the multiplexer 531, the multiplexer 541, the multiplexer 551 and the multiplexer 561 are examples of the first multiplexers.

The buffer unit 502 includes a plurality of registers, for example, the plurality of registers include a register 512, a register 522, a register 532 and a register 542. Each register is one buffer region.

The writing unit 503 includes a plurality of multiplexers, and the plurality of multiplexers in the writing unit 503 are, for example, a multiplexer 513, a multiplexer 523, a multiplexer 533, a multiplexer 543, a multiplexer 553 and a multiplexer 563. The plurality of multiplexers, such as the multiplexer 513, the multiplexer 523, the multiplexer 533, the multiplexer 543, the multiplexer 553 and the multiplexer 563 are examples of the second multiplexer.

In FIG. 6A, each square represents one register, and each trapezoid represents one multiplexer.

The apparatus for data transmission 500 in FIG. 6A is an example of a hardware structure which corresponds to a single bank and is used for rearranging 16bit data. As described above, the single bank can correspond to 4 buffer regions, namely 4 registers, and each register is used for storing one 16bit data, so that parallel processing of writing and reading the 16bit data by the buffer unit can be realized.

For the reading unit 501, for example, the multiplexer 511 and the multiplexer 521 are both one-to-many selectors, namely one input end and a plurality of output ends. The multiplexer 531, the multiplexer 541, the multiplexer 551 and the multiplexer 561 can be many-to-one multiplexers, namely a plurality of input ends and one output end.

For example, the input end of the multiplexer 511 is coupled with the sub-data units (for example, sub-data units of the index 0, the index 2, the index 4 and the index 6) at the first row in the bank, and the output end of the multiplexer 511 is coupled with the multiplexer 531, the multiplexer 541 and the multiplexer 551, so as to receive first data of the sub-data units at the first row in the bank, and to output the first data to one of the multiplexer 531, the multiplexer 541 and the multiplexer 551.

The input end of the multiplexer 521 is coupled with the sub-data units (for example, sub-data units of the index 1, the index 3, the index 5 and the index 7) at the second row in the bank, and the output end of the multiplexer 521 is coupled with the multiplexer 541, the multiplexer 551 and the multiplexer 561, so as to receive second data of the sub-data units at the second row in the bank, and to output the second data to one of the multiplexer 541, the multiplexer 551 and the multiplexer 561.

The multiplexer 531, the multiplexer 541, the multiplexer 551 and the multiplexer 561 are coupled with the register 512, the register 522, the register 532 and the register 542 in a one-to-one correspondence manner, so as to respectively write data provided by the multiplexer 531, the multiplexer 541, the multiplexer 551 and the multiplexer 561 into the corresponding registers.

For the writing unit 503, for example, the multiplexer 513, the multiplexer 523, the multiplexer 533 and the multiplexer 543 are the one-to-many multiplexers; and the multiplexer 553 and the multiplexer 563 can be many-to-one multiplexers.

The input ends of the multiplexer 513, the multiplexer 523, the multiplexer 533 and the multiplexer 543 are coupled with the register 512, the register 522, the register 532 and the register 542 in a one-to-one correspondence manner; the output end of the multiplexer 513 is coupled with the input end of the multiplexer 553, and the output end of the multiplexer 523 is coupled with the input ends of the multiplexer 553 and the multiplexer 563 respectively; the output end of the multiplexer 533 is coupled with the input ends of the multiplexer 553 and the multiplexer 563 respectively; and the output end of the multiplexer 543 is coupled with the input end of the multiplexer 563. The output end of the multiplexer 553 is coupled with a first row of sub-data units of the second memory, and the output end of the multiplexer 563 is coupled with a second row of sub-data units of the second memory.

For example, in the 1^{st} cycle, the multiplexer 511 and the multiplexer 521 receive data in the sub-data unit of the index 0 and the sub-data unit of the index 1 from the memory unit of the depth of 0 of the bank in the first memory. In the following, in order to facilitate description and understanding, it is assumed that data stored in an index x is x, and x is a positive integer. In the 1^{st} cycle, the multiplexer 511 and the multiplexer 521 receive data 0 in the sub-data unit of the index 0 and data 1 in the sub-data unit of the index 1 in the memory unit in the depth 0. The multiplexer 511 writes the data 0 into the register 512 via the multiplexer 531; and the multiplexer 521 writes the data 1 into the register 522 via the multiplexer 541.

In the 2^{nd} cycle, the multiplexer 511 and the multiplexer 521 receive data 2 in the sub-data unit of the index 2 and data 3 in the sub-data unit of the index 3 in the memory unit in the depth 1. Moreover, the multiplexer 511 writes the data 2 into the register 532 via the multiplexer 551; and the multiplexer 521 writes the data 3 into the register 542 via the multiplexer 561.

In the 3^{rd} cycle, the multiplexer 513 receives data 0 provided by the register 512, and the multiplexer 553 provides the data 0 to the memory unit in the depth of 0 of the second memory to store at the low 16-bit. The multiplexer 533 receives data 2 provided by the register 532, and the multiplexer 563 provides the data 2 to the memory unit in the depth of 0 of the second memory to store at the high 16-bit. Moreover, the multiplexer 511 and the multiplexer 521 receive data 4 in the sub-data unit with the index of 4 and data 5 in the sub-data unit with the index of 5 in the memory unit in the depth of 2. Moreover, the multiplexer 511 writes the data 4 into the register 512 through the multiplexer 531; and the multiplexer 521 writes the data 5 into the register 532 through the multiplexer 551.

In the 4^{th} cycle, the multiplexer 523 receives data 1 provided by the register 522, and the multiplexer 553 provides the data 1 to the memory unit in the depth of 1 of the second memory to store at the low 16-bit. The multiplexer 543 receives data 3 provided by the register 542, and the multiplexer 563 provides the data 3 to the memory unit in the depth of 1 of the second memory to store in at the high 16-bit. Moreover, the multiplexer 511 and the multiplexer 521 receive data 6 in the sub-data unit with the index of 6 and data 7 in the sub-data unit with the index of 7 in the memory unit in the depth of 3. Moreover, the multiplexer 511 writes the data 6 into the register 522 through the multiplexer 541; and the multiplexer 521 writes the data 7 into the register 542 through the multiplexer 561.

The multiplexers and the registers cooperate to execute the similar operation in each subsequent cycle, so that the apparatus for data transmission 500 completes the steps in FIG. 3A-FIG. 3G, which will not be listed.

FIG. 6B is a schematic structural diagram of another apparatus for data transmission 600 provided by at least one embodiment of the present disclosure.

The apparatus for data transmission 600 in FIG. 6B is an example of a hardware structure which corresponds to a single bank and is used for rearranging 8bit data. As described above, the single bank can correspond to 16 buffer regions, namely 16 registers, each register is used for storing one 8bit data, and therefore parallel processing of writing and reading of the 8bit data by the buffer units can be achieved.

In the example shown in FIG. 6B, the reading unit 601, for example, includes 4 one-to-many multiplexers 611 and 16 many-to-one multiplexers 621; the buffer unit 602, for example, includes 16 registers 612; and the writing unit 603, for example, includes 16 one-to-many multiplexers 613 and 4 many-to-one multiplexers 623. Similarly, in FIG. 6A, each square represents one register, and each trapezoid represents one multiplexer.

The operation performed by the plurality of multiplexers 611 and the plurality of multiplexers 621 in the reading unit 601 is similar to that of the plurality of multiplexers in the reading unit in FIG. 6A; the operation performed by the 16 registers 612 is similar to that of the register 512, the register 522, the register 532 and the register 542 in FIG. 6A; and the operation performed by the plurality of multiplexers 613 and the plurality of multiplexers 623 in the writing unit 603 is similar to that of the plurality of multiplexers in the writing unit 503 in FIG. 6A. The multiplexers and the registers cooperate to complete various steps in FIG. 4A-FIG. 4M.

It is to be noted that FIG. 6A and FIG. 6B are only schematic diagrams of one hardware structure, and do not have limitation on the embodiments of the present disclosure; and the hardware structure in practical application can be more than or less than the hardware structure shown in FIG. 6A and FIG. 6B.

In FIG. 6A and FIG. 6B, transmitting data in one bank in the first memory to the second memory is taken as an example to describe the embodiments of the present disclosure; however, in practical application, the first memory usually includes a plurality of banks; and the implementation mode described in FIG. 6A or FIG. 6B can be executed for each bank.

In FIG. 6A and FIG. 6B, rearranging while transmitting 16bit data and rearranging while transmitting 8bit data are respectively taken as examples to describe the embodiments of the present disclosure, but which do not have limitation on the present disclosure. The embodiments of the present disclosure are also applicable to 4bit data transmission and rearrangement, 32bit data transmission and rearrangement and the like, and those skilled in the art can adaptively modify according to the embodiments provided by the present disclosure for 4bit data transmission and rearrangement and 32bit data transmission and rearrangement.

In some embodiments of the present disclosure, the first memory includes P banks; the number of buffer units is P, and each buffer unit includes a preset number of registers; the P banks and the P buffer units are in one-to-one correspondence; and P is a positive integer. The preset number is a positive integer greater than or equal to K/m. For example, each buffer unit includes K/m registers as K/m buffer regions, and in response to that the P banks need P buffer units, P * (K/m) buffer regions are needed. For example, each buffer unit may include (K/m)² registers.

According to the hardware structure in the embodiment of the present disclosure, data can be rearranged in the reading process, so that the data rearrangement step does not take up extra time, and the data reading efficiency is improved. Moreover, the matrix rearrangement hardware structure in the present disclosure is suitable for the LSM with a configurable bank number, and meets the requirements of LSM with different bit widths (bandwidths); and moreover, the hardware structure in the embodiment of the present disclosure is suitable for matrix operations of various data formats, including but not limited to 16bit, 8bit, 4bit and the like.

In the embodiment of the present disclosure, the hardware structure of the apparatus for data transmission includes the hardware structures of P single banks, and the number of P is consistent with the number of banks in the LSM. The input of the apparatus for data transmission comes from the LSM, and the output of the apparatus for data transmission is sent to the vector general register array.

The resources and connection relationships of each single bank hardware structure are different according to whether the matrix data format is 16bit, 8bit or 4bit. In response to that data is 16bit (as shown in FIG. 6A), input data will be sent into 4*P 16bit buffer regions at a specific cycle according to a specific connection relationship, and then will be outputted from the buffer regions according to a specific sequence. In response to that the data is 8bit (as shown in FIG. 6B), the input data will be sent into 16*P 8bit buffer regions at a specific cycle according to a specific connection relationship, and then will be outputted from the buffer regions according to a specific sequence. Similarly, in response to that the data is 4bit, the input data will be sent into 64*P 4bit buffer regions at a specific cycle according to a specific connection relationship, and then will be outputted from the buffer regions according to a specific sequence.

It is to be noted that in the embodiments of the present disclosure, each unit of the apparatus for data transmission corresponds to each step of the above method for data transmission, and the specific functions of the apparatus for data transmission can refer to relevant descriptions about the method for data transmission, which will not be listed here. The components and structures of the apparatus for data transmission 500 as shown in FIG. 5 and the apparatus for data transmission as shown in FIG. 6B are only exemplary, but are not limited. The apparatus for data transmission may further include other components and structures as required.

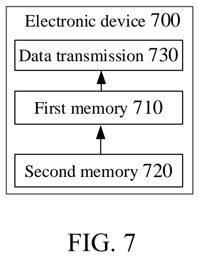

FIG. 7 shows a schematic diagram of an electronic device 700 provided by at least one embodiment of the present disclosure.

For example, as shown in FIG. 7, the electronic device 700 includes an apparatus for data transmission 710, a first memory 720 and a second memory 730.

The apparatus for data transmission 710, for example, is the apparatus for data transmission provided by any embodiment of the present disclosure. For example, the apparatus for data transmission 710 can be of a structure shown in FIG. 6A or FIG. 6B. The first memory 720 is coupled with the apparatus for data transmission 710, and the apparatus for data transmission 710 is coupled with the second memory 730.

The first memory 720, for example, is the LSM shown in FIG. 1B, and the second memory 730, for example, is the vector general register array shown in FIG. 1B.

The apparatus for data transmission 710 is configured to transmit data from the first memory to the second memory; the first memory includes the bank with the depth of N, and the width of the first memory units of the bank on each depth is K bits; and the second memory includes the plurality of second memory units which are continuously arranged, and the width of each second memory unit is K bits. The method includes: sequentially reading data stored in the first memory unit on each depth in N depths, and sequentially storing the data in the N depths into the buffer unit, in which the data has m bits, and each first memory unit is divided into K/m sub-data units from low bits to high bits according to the m bits; and writing the data in the bank into the second memory from the buffer unit according to the specified sequence, in which, the specified sequence includes: K/m data at the equal bit position in adjacent K/m first memory units in the bank is stored in the equal second memory unit of the second memory.

The electronic device can rearrange the data in the reading process, so that the step of rearranging the data does not take up extra time, and the data reading efficiency is improved. Moreover, the matrix rearrangement hardware structure in the present disclosure is suitable for the LSM with a configurable bank number, and meets the requirements of LSM with different bit widths (bandwidths); and moreover, the hardware structure in the embodiment of the present disclosure is suitable for matrix operations of various data formats, including but not limited to 16bit, 8bit, 4bit and the like.

For example, the apparatus for data transmission 710 can be realized through hardware, and in other embodiments of the present disclosure, the apparatus for data transmission 710 can be hardware, software, firmware and any feasible combination thereof. For example, the apparatus for data transmission 710 can be a special or general circuit, chip or apparatus and the like. As for the specific implementation form of the above units, the embodiments of the present disclosure do not make limitation.

The following points require clarification:
(1) The accompanying drawings of the embodiments of the present disclosure only depict structures relevant to the disclosed embodiments. For other structures, reference may be made to conventional designs.
(2) The embodiments of the present disclosure and their features may be combined to derive new embodiments, provided no conflict arises.

The above descriptions represent only specific implementations of the present disclosure. However, the protection scope of the present disclosure is not limited thereto. The protection scope of the present disclosure shall be defined by the scope of the appended claims.

## Claims

1. A method for data transmission, for transmitting data from a first memory to a second memory, wherein the first memory comprises a bank with a depth of N, and a width of first memory units of the bank on each depth is K bits, the second memory comprises a plurality of second memory units continuously arranged, and a width of a second memory unit is K bits, and the method comprising:
sequentially reading data stored in the first memory units on each depth in N depths, and sequentially storing data in the N depths into a buffer unit, wherein the data has m bits, and each first memory unit is divided into K/m sub-data units from low bits to high bits according to the m bits, wherein N, K and m are positive integers; and
writing data in the bank into the second memory from the buffer unit according to a specified sequence,
wherein the specified sequence comprises:
K/m data at an equal bit position in adjacent K/m first memory units in the bank is stored in an equal second memory unit of the second memory.

2. The method according to claim 1, wherein data stored in the first memory units with low depth in the adjacent K/m first memory units in the bank is located at a low bit in the second memory unit.

3. The method according to claim 1 or 2, wherein the sequentially reading data stored in the first memory units on each depth in N depths, comprises:
sequentially reading the data stored in the first memory units on each depth in the N depths according to a depth sequence, and parallelly reading data in K/m sub-data units stored in an equal first memory unit.

4. The method according to any one of claims 1 to 3, wherein the buffer unit comprises a plurality of buffer regions, each buffer region is configured to store one m-bit data, and a number of the plurality of buffer regions is greater than or equal to K/m.

5. The method according to claim 4, wherein the buffer unit comprises (K/m)² buffer regions which are continuously arranged; and
the writing data in the bank into the second memory from the buffer unit according to a specified sequence, comprises:
after sequentially storing data in first memory units for K/m depths into the buffer unit, starting to read data in K/m sub-data units at an equal bit position in the adjacent K/m first memory units in the bank from the buffer unit.

6. The method according to claim 5, wherein the after sequentially storing data in first memory units for K/m depths into the buffer unit, starting to read data in K/m sub-data units at an equal bit position in the adjacent K/m first memory units in the bank from the buffer unit, comprises:
after sequentially storing the data in the first memory units for the K/m depths into the buffer unit, parallelly reading the data in the K/m sub-data units at the equal bit position in the adjacent K/m first memory units in the bank; and
writing the data in the K/m sub-data units at the equal bit position in the adjacent K/m first memory units into the equal second memory unit of the second memory.

7. The method according to claim 6, wherein a plurality of sub-data units in the bank are continuously indexed and numbered according to a sequence from low to high in depth and a sequence from low to high in bit position;
the after sequentially storing the data in the first memory units for the K/m depths into the buffer unit, parallelly reading the data in the K/m sub-data units at the equal bit position in the adjacent K/m first memory units in the bank, comprises:
from a 1^{st} cycle to a (K/m)^{th} cycle, reading data in sub-data units with index numbers of (i-1) × K/m, ..., K/m × i-1 from the bank in each cycle, and storing into the buffer unit, wherein i represents a cycle count value; and
from a (K/m+1)^{th} cycle, for each cycle, while reading data in sub-data units with the index number of (i-1) × K/m, ..., K/m × i-1 and storing into the buffer unit, parallelly reading the K/m data at the equal bit position in the adjacent K/m first memory units in the bank from the buffer unit.

8. An apparatus for data transmission, configured to transmit data from a first memory to a second memory, wherein the first memory comprises a bank with a depth of N, and a width of first memory unit of the bank on each depth is K bits, the second memory comprises a plurality of second memory units continuously arranged, and a width of a second memory unit is K bits, and the apparatus comprising:
a buffer unit;
a reading unit, configured to sequentially read data stored in the first memory unit on each depth in N depths, and sequentially store data in the N depths into the buffer unit, wherein the data has m bits, and each first memory unit is divided into K/m sub-data units from low bits to high bits according to the m bits, wherein N, K and m are positive integers; and
a writing unit, configured to write data in the bank into the second memory from the buffer unit according to a specified sequence,
wherein the specified sequence comprises:
K/m data at an equal bit position in adjacent K/m first memory unit in the bank is stored in an equal second memory unit of the second memory.

9. The apparatus according to claim 8, wherein
the buffer unit comprises a plurality of registers, and each register is configured to store data read from the first memory unit;
the reading unit comprises a plurality of first multiplexers, and the plurality of first multiplexers are configured to read data stored in the first memory unit on each depth in N depths of each bank, and sequentially store the data stored in the first memory unit in each depth into K/m registers in the plurality of registers; and
the writing unit comprises a plurality of second multiplexers, and the plurality of second multiplexers are configured to select the K/m data at the equal bit position in the adjacent K/m first memory unit in the bank from the plurality of registers, and write into the equal second memory unit of the second memory.

10. The apparatus according to claim 8 or 9, wherein the first memory comprises P banks, a number of buffer units is P, and each buffer unit comprises a preset number of registers; the P banks and P buffer units are in one-to-one correspondence, wherein P is a positive integer.

11. The apparatus according to claim 10, wherein the preset number is a positive integer greater than or equal to K/m.

12. An electronic device, comprising:
the apparatus for data transmission according to any one of claims 8 to 11;
the first memory; and
the second memory,
wherein the first memory is coupled with the apparatus for data transmission, and the apparatus for data transmission is coupled with the second memory.
